# EUROPEAN PATENT APPLICATION

(11) **EP 1 734 284 A1**
(43) Date of publication of application: **20.12.2006**
(21) Application number: 05425424.8
(22) Date of filing: 14.06.2005
(51) Int. Cl.: F16H 7/18, F16H 7/08

(54) **Mechanical tensioner for a transmission chain, comprising two sliding surfaces**

(71) Applicant: Morse Tec Europe S.r.l., 20121 Milano (IT)
(72) Inventor: Baddaria, Giuseppe, 23877 Paderno d'Adda (LC) (IT); Carugati, Massimo, 20059 Vimercate (MI) (IT)
(74) Representative: Coggi, Giorgio

(57) **Abstract**

A mechanical tensioner (1), able to guide the transmission chain of an internal combustion engine, comprises at least one support (10) and at least one elastic guide (2, 2') biased against the transmission chain by at least one flat spring (3, 3'); each end (21, 21'; 22, 22') of the at least one elastic guide (2, 2') slides with respect to the support (10) since it slides on a flat or curved surface (4, 5; 23, 23'; 30, 30') belonging to the support (10) or else on a curved surface (26, 26') slidable with respect to the support (10).

In one embodiment of the invention, the central area (6) of the at least one elastic guide (2, 2') is connected to means (7, 8) able to constrain it to translate along a preestablished path and the flat or curved surfaces (4, 5), belonging to the support (10), are symmetrical with respect to the axis of symmetry of the at least one elastic guide (2, 2') and anyway oriented in space (horizontal, convergent or divergent).

In other embodiments of the invention, one end (21, 21') of the at least one elastic guide (2, 2') slides on a first curved surface (23, 23'), whilst the other end (22, 22') slides on a second curved surface (26, 26') belonging to a pawl (25, 25') - which in turn slides on a notched surface (24, 24') - or slides on a horizontal flat or curved surface (30, 30'); the first curved surface (23, 23'), the notched surface (24, 24') and the horizontal surface (30, 30') belong to the support (10).

The mechanical tensioner (1) can comprise two identical tensioners placed semi-symmetrically on opposite sides of a support (10) common to the two tensioners.

## Description

The present invention refers to a mechanical tensioner comprising at least one elastic guide (carried by at least one flat spring placed beneath the at least one elastic guide) suitable to guide the transmission chain, wherein each end of the at least one elastic guide slides on a flat or curved surface, concave or convex, anyway oriented in space (horizontal or inwardly or outwardly inclined).

Mechanical tensioners consisting of at least one elastic guide - having one end hinged to the support of the tensioner and the other end slidable on a flat or on a curved surface, which is (generally) inclined - are known to the art, the at least one elastic guide being biased against the transmission chain by one or more flat springs disposed on the side of each elastic guide which is opposite to that on which the transmission chain slides.

The mechanical tensioners produced according to the invention present various advantages, among which the fact of being able to be included in a kit - comprising at least two driven sprockets for the chain, the chain, at least one mechanical tensioner according to the invention and at least one support that carries the driven sprockets and the at least one tensioner - which can be assembled separately with respect to the transmission and then inserted into the transmission.

This kit makes it possible at least to reduce the costs of installation of the transmission system.

Object of the present invention is to produce a mechanical tensioner able to present the abovementioned advantages with respect to the mechanical tensioners of the prior art; this object is achieved by means of a mechanical tensioner that presents the characterizing elements illustrated in claim 1.

Further advantageous characteristics of the invention form the subject matter of the dependent claims.

A further object of the present invention is to produce the abovementioned kit comprising at lease one mechanical tensioner produced according to the invention.

The mechanical tensioner will now be described with reference to purely exemplifying (and therefore non-limiting) embodiments illustrated in the appended figures, in which:
- Figures 1 and 2 show diagrammatically a perspective view and a front view, respectively, of a first embodiment of the mechanical tensioner;
- Figures 3 and 4 show diagrammatically a perspective view and a front view, respectively, of a second embodiment of the mechanical tensioner;
- Figures 5 and 6 show diagrammatically a perspective view and a front view, respectively, of a third embodiment of the mechanical tensioner;
- Figures 7 and 8 show diagrammatically a bottom perspective view and a front view, respectively, of an enlarged detail of the tensioner shown in Figures 5 ad 6.

In the appended figures corresponding elements will be identified by the same numerical references.

A mechanical tensioner produced according to the invention, able to guide a transmission chain, comprises a support and at least one elastic guide biased against the chain by at least one flat spring the shape of which matches the profile of the side of the at least one elastic guide opposed to that on which the transmission chain slides.

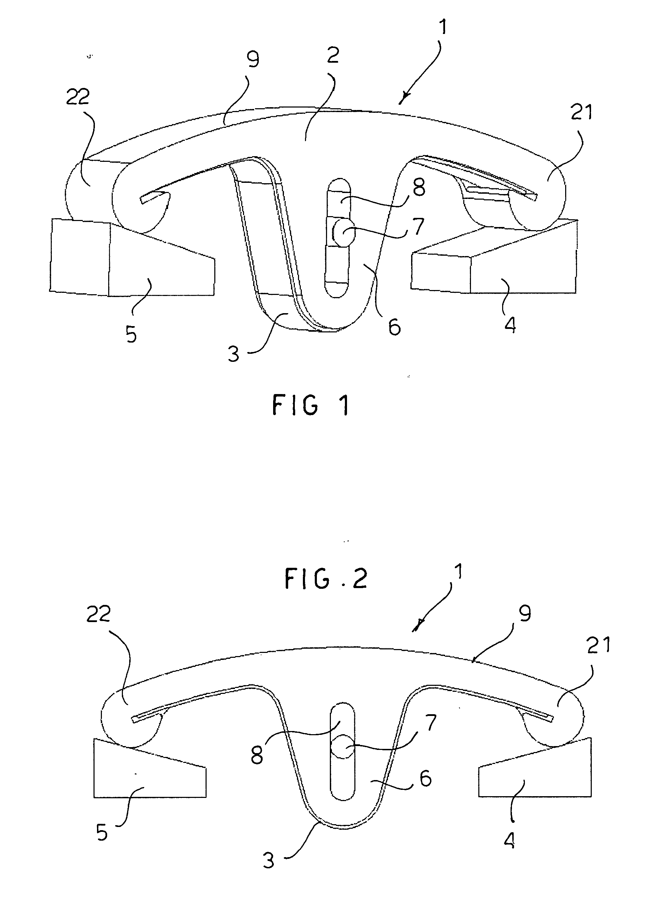

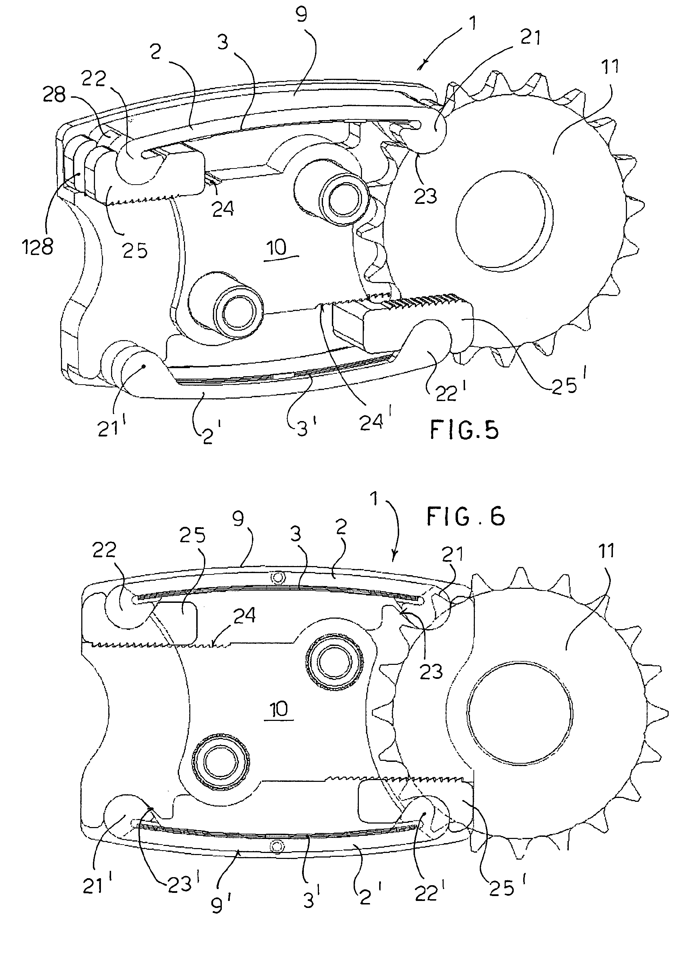

Each end of the at least one elastic guide is able to slide with respect to the support since it slides on a flat or curved surface, convex or concave (Figures 1-4) belonging to the support or on a flat or to a curved surface, convex or concave (Figures 5-8) which in turn is slidable with respect to the support, adapting the shape of the at least one guide to the trajectory followed by the chain.

Without departing from the scope of the invention, the support can be made in one piece with the engine block.

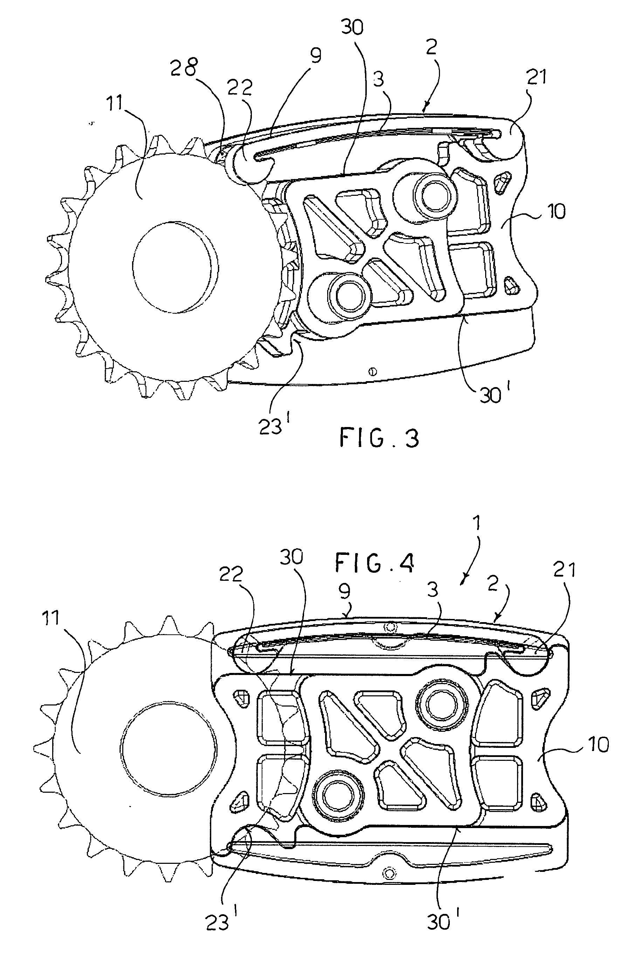

In the present description, the term "support" indicates both a support consisting of a single body (Figures 3-6) and a support consisting of two or more separate parts, not shown in the appended figures.

When the at least one elastic guide tends to "flatten" in response to the stresses transmitted by the transmission chain, the ends of the at least one elastic guide can slide with respect to the support.

Without departing from the scope of the invention, the at least one elastic guide can be biased against the transmission chain by two or more flat springs identical and superimposed on each other.

Figures 1 and 2 show diagrammatically a perspective and a front view, respectively, of a first embodiment of the mechanical tensioner 1, in which each end (21, 22) of the elastic guide 2 slides on a flat surface (4, 5) belonging to the support 10, omitted in Figures 1 and 2 for simplicity of the graphic representation.

Without departing from the scope of the invention, the surfaces 4 and 5 can be curved, concave or convex.

If the support 10 consists of at least two separate parts, the flat or curved surfaces (4, 5) can belong to two distinct parts of the support 10.

Since the ends (21, 22) of the elastic guide 2 tend to move away from each other in response to the stresses transmitted to the sliding surface 9 of the elastic guide 2 by the transmission chain, the flat or curved surfaces (4, 5) are advantageously inclined, symmetrical with respect to the axis of symmetry of the elastic guide 2 and diverging to facilitate the sliding of the ends of the elastic guide 2 on said surfaces.

Without departing from the scope of the invention, in particular applications the flat or curved surfaces (4, 5) may not be symmetrical with respect to the axis of symmetry of the elastic guide 2 and/or horizontal and/or converging.

The central area 6 of the elastic guide 2 is connected to means able to constrain it to translate along a pre-established path which, in the embodiment described herein, is rectilinear and placed along the axis of symmetry of the elastic guide 2: in the embodiment described herein said means consist of a pin 8 integral with the support 10 of the mechanical tensioner 1 and slidable in a slot 7, made in the central area 6 of the elastic guide 2, having the major axis coinciding with said pre-established path but, without departing from the scope of the invention, the slot 7 can be made on the support 10 and the pin 8 can be integral with the elastic guide 2.

Again without departing from the scope of the invention, the pre-established path can be curved or rectilinear but not coinciding with the axis of symmetry of the elastic guide 2.

The ends (21, 22) of the elastic guide 2 and the surfaces (4, 5) on which these ends slide can have a hollow 28 in which one of the driven sprockets 11 of the chain is inserted (Figure 3); the hollows 28 and the driven sprockets 11 have been omitted in the Figures 1 and 2 for the sake of simplicity of the graphic representation.

Figure 3 shows diagrammatically a perspective view of a second embodiment of the mechanical tensioner 1, in which one end 21 of the elastic guide 2 slides on a first curved surface 23 (not shown in Figures 3 and 4 because it is hidden by the end 21 of the elastic guide 2) which retains it laterally, whilst the other end 22 of the elastic guide 2 slides on a horizontal surface 30 belonging to the support 10.

Thanks to the retaining action of the curved surface 23, in this embodiment the slot 7 and the pin 8 provided by the first embodiment (Figures 1 and 2) are not necessary.

Without departing from the scope of the invention, the surface 30 can be a flat surface or a curved surface, concave or convex.

The ends (21, 22) of the elastic guide 2 and the surfaces (23, 30) on which said ends (21, 22) slide advantageously have a hollow 28 able to allow the passage of the driven sprockets 11; in Figure 3 only the hollow 28 present at the end 22 of the elastic guide 2 is visible.

Also visible in figure 3 are a flat spring 3, the support 10 and one of the driven sprockets 11 which carry the transmission chain.

The support 10 advantageously has a semi-symmetrical or symmetrical shape with respect to the axis passing through the centre of the sprockets 11, which makes it possible to mount on the support 10 a second tensioner 1', semi-symmetrical or symmetrical with respect to the tensioner 1, in which one end 21' of an elastic guide 2' slides on a first curved surface 23' whilst the other end 22' of the elastic guide 2' slides on a horizontal surface 30'.

Without departing from the scope of the invention, the surface 30' also can be a flat surface or a curved surface, concave or convex.

The second tensioner can be omitted without departing from the scope of the invention.

Figure 4 shows a front view of the tensioner of Figure 3.

Figure 5 shows diagrammatically a perspective view of a third embodiment of a mechanical tensioner realised according to the invention, which differs from that shown by Figures 3 and 4 essentially in that the end 22 of the elastic guide 2, opposite the end 21 that slides on the first curved surface 23, slides on a second curved surface 26 (Figures 5 and 6) belonging to a pawl 25 which in turn slides on a notched surface 24 belonging to the support 10.

The end 22 of the elastic guide 2 therefore slides on a curved surface (the second curved surface 26) which in turn is slidable with respect to the support 10.

The pawl 25, sliding in a single direction on the notched surface 24, compensates for any slackening of the transmission chain, allowing the tensioner to work always in an optimal manner.

The ends (21, 22) of the elastic guide 2, the curved surface 23, the notched surface 24 and the pawl 25 have (or may have) a hollow (28, 128) in which one of the driven sprockets 11 (omitted in Figures 5 and 6) which carry the transmission chain is partially inserted.

In Figure 5 only the hollow 28 present at the end 22 of the elastic guide 2 and the hollow 128 present in the pawl 25 are shown.

Figure 6 shows a front view of the tensioner of Figure 5.

In the embodiment shown by Figures 5 and 6 the support 10 advantageously has a semi-symmetrical or symmetrical shape with respect to the axis passing through the centre of the sprockets 11, which makes it possible to mount on the support 10 a second tensioner 1' (omitted in Figures 5 and 6) in which one end 21' of the further elastic guide 2' slides on a curved surface 23' whilst the other end 22' of the further elastic guide 2' slides on a second curved surface 26' belonging to a pawl 25' which in turn slides on a notched surface 24' belonging to the support 10.

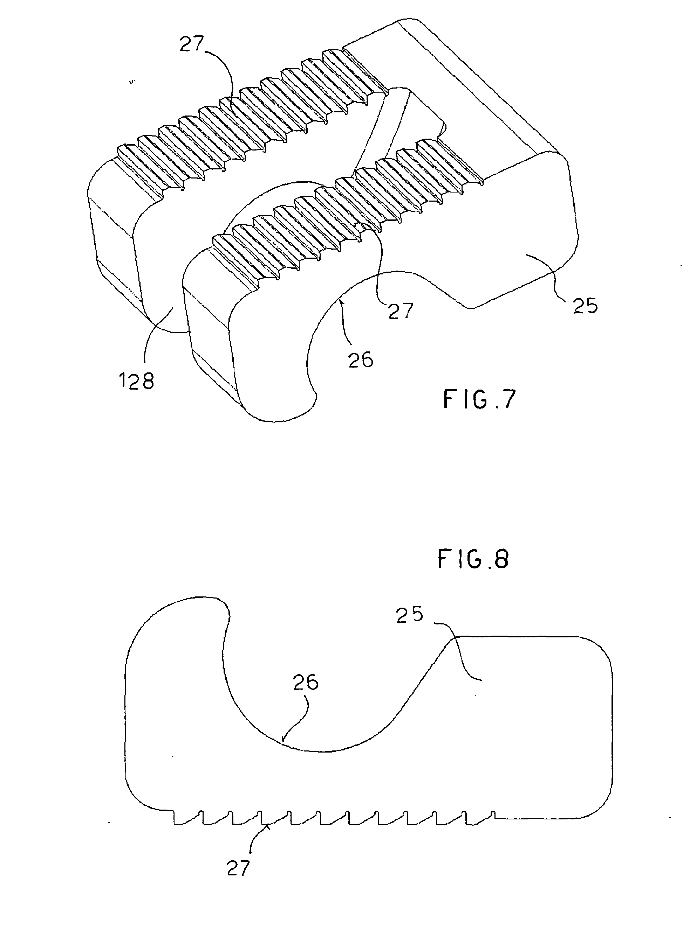

Figures 7 and 8 show a perspective view and a front view, enlarged, of the pawl 25 shown by Figures 5 and 6; the second curved surface 26 and the notched area 27 that engages with the notched surface 24 belonging to the support 10 (Figures 3 and 4) can be seen better in Figures 7 and 8.

A person skilled in the art can make a mechanical tensioner, similar to that shown by Figures 5 and 6, comprising two tensioners made according to the first embodiment (Figures 1 and 2) or to the second embodiment (Figures 3 and 4), respectively, and placed on the opposite sides of the support 10, which is common to the two tensioners.

These further mechanical tensioners are not shown in the appended figures for the sake of simplicity of the graphic representation.

A kit designed to be assembled separately with respect to the chain transmission and to be inserted into said transmission and comprising at least two driven sprockets 11 for the chain, the chain, at least one support 10 and at least one mechanical tensioner 1 made according to the invention also forms subject matter of the invention.

Without departing from the scope of the invention, a person skilled in the art can make all those changes and improvements to the above described tensioner that might be suggested by normal experience and/or the natural evolution of the art.

## Claims

1. A mechanical tensioner (1) designed to guide a transmission chain and comprising a support (10) and at least one elastic guide (2, 2') biased against the transmission chain by at least one flat spring (3, 3'), **characterized in that** each end (21, 21', 22, 22') of the at least one elastic guide (2, 2') is able to slide with respect to the support (10).

2. A mechanical tensioner (1) as in claim 1, **characterized in that** each end (21, 21', 22, 22') of the at least one elastic guide (2, 2') slides on a surface (4, 5; 23, 23'; 30, 30') belonging to the support (10).

3. A mechanical tensioner (1) as in claim 1, **characterized in that** one end (21, 21') of the at least one elastic guide (2, 2') slides on a surface (23, 23') belonging to the support (10) whilst the other end (22, 22') of the at least one elastic guide (2, 2') slides on a curved surface (26, 26') which in turn is slidable with respect to the support (10).

4. A mechanical tensioner (1) as in claim 2 or 3, **characterized in that** the surfaces (4, 5; 23, 23'; 30, 30') belonging to the support (10) are flat or curved.

5. A mechanical tensioner (1) as in claim 1, **characterized in that** the shape of the at least one flat spring (3, 3') matches the profile of the side of the at least one elastic guide (2, 2') opposed to that (9, 9') on which the transmission chain slides.

6. A mechanical tensioner (1) as in claim 2, **characterized in that** the ends (21, 21'; 22, 22') of the at least one elastic guide (2, 2') and the surfaces (4, 5; 23, 23'; 30, 30') on which said ends (21, 21'; 22, 22') slide have a hollow (28) in which one of the sprocket wheels (11) which carry the transmission chain is inserted.

7. A mechanical tensioner (1) as in claim 2, **characterized in that** the surfaces (4, 5) are inclined, symmetrical with respect to the axis of symmetry of the at least one elastic guide (2) and divergent.

8. A mechanical tensioner (1) as in claim 2, **characterized in that** the surfaces (4, 5) are not symmetrical with respect to the axis of symmetry of the at least one elastic guide (2).

9. A mechanical tensioner (1) as in claim 2, **characterized in that** the surfaces (4, 5) are horizontal or convergent.

10. A mechanical tensioner (1) as in claim 1, **characterized in that** the central area (6) of the at least one elastic guide (2, 2') is connected to means (7, 8) able to constrain it to translate along a pre-established path.

11. A mechanical tensioner (1) as in claim 10, **characterized in that** the pre-established path is curved or rectilinear.

12. A mechanical tensioner (1) as in claim 11, **characterized in that** the pre-established rectilinear path is placed along the axis of symmetry of the at least one elastic guide (2, 2').

13. A mechanical tensioner (1) as in claim 10, **characterized in that** the means able to constrain the central area (6) of the at least one elastic guide (2, 2') to translate along said pre-established path consist of a pin (8) integral with the support (10) of the mechanical tensioner (1) and slidable in a slot (7) formed in the central area (6) of the at least one elastic guide (2, 2').

14. A mechanical tensioner (1) as in claim 10, **characterized in that** the means able to constrain the central area (6) of the at least one elastic guide (2, 2') to translate along said pre-established path consist of a slot (7) formed in the support (10) of the mechanical tensioner (1) and slidable on a pin (8) integral with the central area (6) of the at least one elastic guide (2, 2').

15. A mechanical tensioner (1) as in claim 13 or 14, **characterized in that** the major axis of the slot (7) coincides with said pre-established path.

16. A mechanical tensioner (1) as in claim 2, **characterized in that** one end (21, 21') of the elastic guide (2, 2') slides on a first curved surface (23, 23') whilst the other end (22, 22') of the elastic guide (2, 2') slides on a horizontal surface (30, 30') belonging to the support (10).

17. A mechanical tensioner (1) as in claim 4, **characterized in that** one end (21, 21') of the at least one elastic guide (2, 2') slides on a first curved surface (23, 23') whilst the other end (22, 22') of the elastic guide (2, 2') slides on a second curved surface (26, 26') belonging to a pawl (25, 25') which in turn slides on a notched surface (24, 24') belonging to the support (10).

18. A mechanical tensioner (1) as in claim 17, **characterized in that** the pawl (25, 25') has a hollow (128) in which one of the driven sprockets (11) which carry the transmission chain is partially inserted.

19. A mechanical tensioner (1) as in at least one of claims 1 to 18, **characterized in that** the support (10) has a semi-symmetrical shape with respect to the axis passing through the centre of the sprocket wheels (11) which carry the transmission chain and **in that** it comprises two identical tensioners placed on opposite sides of the support (10), which is common to the two tensioners.

20. A mechanical tensioner (1) as in at least one of claims 1 to 18, **characterized in that** the support (10) has a symmetrical shape with respect to the axis passing through the centre of the sprocket wheels (11) which carry the transmission chain and **in that** it comprises two identical tensioners placed on the opposite sides of the support (10) which is common to the two tensioners.

21. A kit designed to be assembled separately with respect to the chain transmission and to be inserted into said transmission and comprising at least two driven sprockets (11) for the chain, the chain and at least one support (10), **characterized in that** it further comprises at least one mechanical tensioner (1) made according to at least one of the preceding claims.
